## Europäisches Patentamt
## European Patent Office
## Office européen des brevets

(11) Publication number: **0 069 564**
A2

# EUROPEAN PATENT APPLICATION

(21) Application number: **82303497.0**

(22) Date of filing: **02.07.82**

(51) Int. Cl.³: **F 25 B 27/00**
**F 24 J 3/04, F 02 G 5/00**

(30) Priority: **02.07.81 GB 8120469**

(43) Date of publication of application:
**12.01.83 Bulletin 83/2**

(84) Designated Contracting States:
**AT BE CH DE FR GB IT LI LU NL SE**

(71) Applicant: **BORG-WARNER LIMITED**
**Jubilee Road**
**Letchworth Hertfordshire(GB)**

(72) Inventor: **Hunter, Joseph Bernard**
**Brackendale East St. George's Hill**
**Weybridge Surrey(GB)**

(72) Inventor: **Turbard, Alan Michael**
**27 Swan Street Sible Hedingham**
**Halstead Essex(GB)**

(72) Inventor: **Foley, Peter Neville**
**4 Melford Gardens**
**Basingstoke Hampshire, RG22 5EZ(GB)**

(74) Representative: **Ayers, Martyn Lewis Stanley et al,**
**J.A. KEMP & CO. 14 South Square Gray's Inn**
**London, WC1R 5EU(GB)**

(54) **Heat pump system.**

(57) A self-contained heat pump system comprises mounted with an enclosing housing a fossil-fueled engine (6), a compressor (7) and a heat pump circuit including the compressor and comprising a condenser receiver (10), an expansion valve (15) and an evaporator (2). Means (11, 27) are provided for circulating water to be heated through the condenser receiver (10) and through heat exchangers (9, 8) connected to the engine coolant and the engine exhaust. Air (1) is passed through the evaporator (2) to be cooled thereby after having been drawn through the housing over the exterior of the condenser receiver (10), the compressor (7), the engine (6) and the heat exchangers (8, 9) in order to absorb excess heat therefrom prior to being cooled in the evaporator. The system is particularly of use for controlling the environment in a glasshouse with humid air being drawn from the glasshouse space and being mixed with fresh air drawn in from the atmosphere in the housing before being passed through the evaporator for extraction of heat therefrom.

The engine speed may be continuously variable across a suitable operating range and controlled so as to vary across that range in between compressor loading and unloading steps.

./...

Fig.1.

-1-

DESCRIPTION

TITLE: FOSSIL-FUELED HEAT PUMP SYSTEM

This invention relates to heat pumps and more especially but not exclusively to a self-contained fossil-fueled, air to water, heat pump which is capable of extracting energy from air and supplying this energy to heat hot water for space heating purposes. A particular exemplary use of the heat pump system of the present invention is for maintaining temperature within a glasshouse with the glasshouse being provided with a hot water pipe heating system supplied with hot water from the heat pump system. Air is extracted from the space in the glasshouse when its humidity rises to too high a value with the heat pump system extracting latent heat from this removed humid air for supply to the heating water.

The energy conversion is achieved by utilising a conventional refrigeration reversed Carnot cycle technique supplemented by heat recovery using engine coolant and exhaust cooling heat exchangers to ensure maximum heating availability with minimum use of fuel.

According to the present invention there is provided a heat pump system comprising a fossil-fueled engine, a compressor drivable by said engine, a heat pump circuit comprising the compressor, a condenser receiver, an expansion valve and an evaporator connected in series, water conduit means for flowing water through said condenser receiver to a place of use with said water being heated within said condenser by transfer of heat from compressed refrigerant, and means for passing air over said engine and compressor to be heated thereby prior to being passed through said evaporator in heat exchange relationship with refrigerant passing there-through during use of the system.

Preferably the air passing means comprises an air inlet to a housing containing said engine, condenser and compressor and a fan for causing an air flow from the interior of the housing or ambient through the evaporator to exhaust.

Preferably also a controllable inlet is provided to the housing for the admission of humid air thereto with the controllable inlet being provided with dampers which are modulated as a result of a monitored input signal depending upon the dry bulb temperature and relative humidity within the controlled space as is the start and control of the engine. At full load requirement the engine will run at a predetermined maximum speed with all cylinders of the compressor fully loaded.

At the start up the compressor cylinders either will be fully unloaded so as to maintain the starting torque at a minimum value or there will be provided a disconnectable clutch between the engine and the compressor to ensure that the compressor is not driven during the start up.

With a falling demand in heat requirement indicated by appropriate sensor signals, it is preferred that the first stage in the unloading of the heat pump circuit is controlled modulation of the compressor speed to a predetermined minimum value which may, for example, be approximately 70% of the maximum speed i.e. a 30% heat capacity reduction. For further reduction of the heat capacity, control can then be achieved by sequenced unloading of the compressor cylinders. The modulation of the engine speed may be repeated for one or more further stages of compressor loading or unloading as the compressor demand increases or decreases - this is more fully discussed below.

Preferably means are provided whereby with a rising demand for a heat requirement beyond the capability of the selected heat pump system an initiation signal is made to start operation of an additional bivalent heat sourceand/or a warning signal is provided.

The whole unit assembly is preferably totally self-contained with an electrical generator being included driven by the internal combustion engine. This electrical supply is then used to power evaporator fan motors and other power driven means in the system as well as any illumination device that may be required. The fundamental control circuitry is preferably powered by a battery circuit such that the operating sequence control is available when the engine is not running. Whereas the same battery may be used to supply the necesary energy to restart the engine preferably two batteries are provided, one a light duty battery for ensuring operation of the control circuitry and the other a heavy duty battery for supplying heavier currents when required, for example for starting the engine.

As mentioned above, rather than running the engine at a set speed, as is conventional, the speed of the engine may be controlled so that it varies across an operating range so that the engine speed increases or decreases as the compressor load increases or decreases, suitably in an infinitely variable manner so that the engine goes just fast enough to accommodate the desired compressor load. This will minimise fuel consumption. Where the compressor has a number of stages which may brought on line or taken off line in a step-wise fashion as the compressor load increases or decreases, the engine speeds modulation may be used, as it were, to "fill in" the gaps between these step wise changes in the number of compressor stages in operation. Thus, for example, an increase in compressor load may make it appropriate to increase the number of compressor stages on line. At this time, the engine speed is at the bottom end of its range. Then, as the compressor load increases, the number of stages in operation is held constant until the engine speed has been increased to the upper end of its operating range, whereupon another compressor stage is brought on line. A similar sequence, with the engine speed being modulated in the downward direction, may occur for progressively decreasing engine load. Where the compressor has a number of loading and unloading stages, preferably this engine speed modulation upwardly or downwardly occurs between each step of loading and unloading.

It will be appreciated that the concept of varying the engine speed to accommodate changing compressor loads may be used in heat pump systems other than the particular type defined in the first aspect of the invention. Thus the second aspect of the invention provides a heat pump apparatus comprising a refrigerant compressor having a number of stages which can be loaded or unloaded responsive to varying compressor demand, a variable speed engine for driving the compressor, and a control circuit arranged to sense the compressor load and to control the engine speed so as to increase and decrease, as appropriate, over a range as the compressor load increases and decreases over a corresponding range so as to tend to minimise the engine operating speed for a given compressor load.

The control circuit may be arranged to derive a signal representing compressor demand, to produce therefrom a demanded engine speed signal which is modified in accordance with the number of stages loaded or unloaded and to thereby control the engine throttle setting so that with changing compressor demand, following a change in the number of compressor stages in operation, the engine speed varies across its range.

The invention will be further described, for example, with reference to the accompanying drawings, wherein:

Figure 1 is a schematic diagram of a heat pump system embodying the present invention;

Figure 2 is a plan view illustrating the general layout of the heat pump system of Figure 1 only with certain parts omitted for the sake of clarity of illustration;

Figure 3 is an end elevation of the structure of Figure 2;

-5-

Figure 4 is a side elevation of the structure of Figure 2;

Figure 5 is a diagramatic illustration of a control arrangement which may be used in the heat pump system.

Figure 6a shows schematically the engine and compressor of a heat pump according to the invention;

Figure 6b shows schematically the engine speed control loop of the engine of Figure 6A;

Figure 7A shows graphically the compressor load demand v. engine speed behaviour of the engine;

Figure 7b shows graphically the compressor load demand v. compressor output;

Figure 8 shows the engine speed control logic; and

Figures 9, 9a, b and c are plan, side elevation and front elevations respectively of a further embodiment of the 1st aspect of the invention.

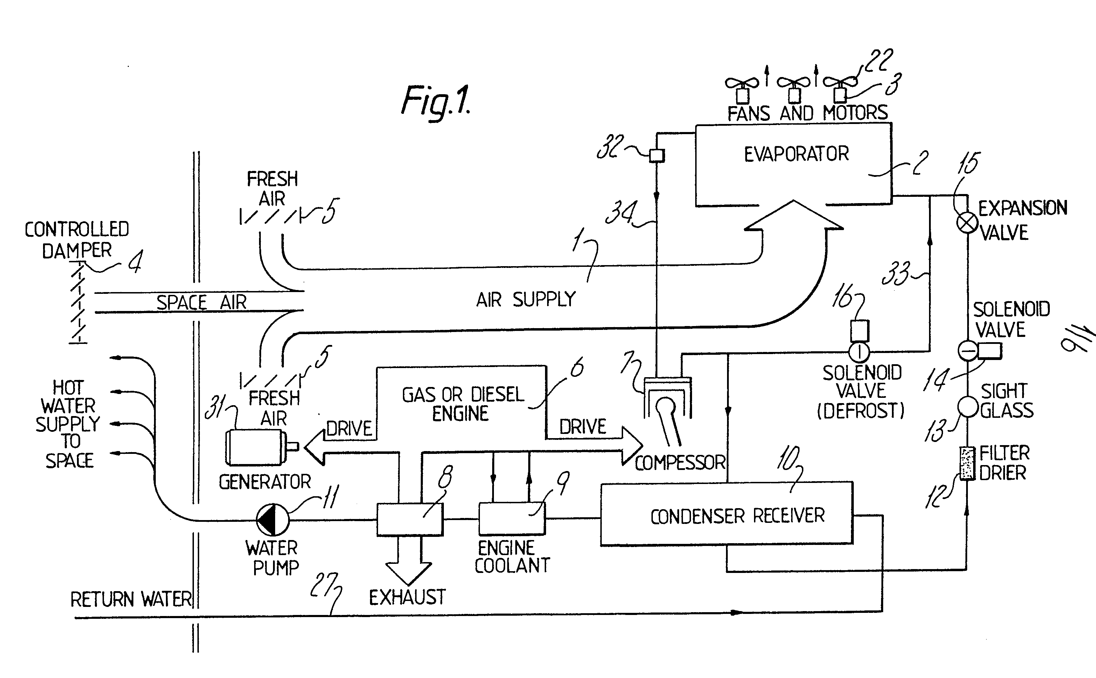

Referring to Figure 1 there is illustrated a heat pump system adapted for the extraction of ambient energy from either outside air or from a mixture of outside air and process air, preferably having a surplus high humidity content, and using this energy for space heating by way of a hot water supply. A particular example has been for heating a glasshouse where air extracted from the glasshouse is used to give up its excess heat for supply to the heat pump for subsequently heating a hot water supply to heating pipes in the interior of the greenhouse.

Various components of the heat pump are arranged within the housing used to control the flow of input air illustrated in Figure 1 by an open arrow 1. The housing is shown as having three air inlets, an air inlet 4 provided with a controllable damper for controlling the flow of air from the interior of the space to be heated, and two fresh air inlets 5 provided with self-compensating pressure relief dampers. The air supply 1 passes over the various components of the heat pump system before passing to an evaporator 2 through which the air supply is drawn by means of fans 22 driven by motors 3. With this arrangement the amount of input fresh air is automatically increased when the control damper 4 is closed and is reduced when the control damper is opened. The heat pump system components comprise, inter alia, a fossil-fuel, preferably gas or diesel, engine 6, connected *via* a magnetic clutch drive 30 to a refrigerant compressor 7. The engine exhaust and coolant liquid in the engine pass respectively through heat exchangers 8 and 9.

A generator 31 is preferably included to make the control system self-contained as will be explained later although a purely external electrical supply may be relied upon should such be more convenient in a particular location of the system of the invention. While the magnetic clutch drive 30 is preferred a direct resilient coupling may be used if desired although in such a case it will be necessary to ensure that the cylinders of the compressor 7 are unloaded during start up of the engine 6 rather than simply declutching the compressor from the engine during the start up.

The refrigerant system comprises an evaporator 2 from which refrigerant passes through a suction line or pipe 34 to the compressor 7. In the pipe 34 there is provided a temperature sensor 32. The refrigerant passes from the compressor 7 to a condenser receiver 10 where it is condensed into a cooled liquid. This liquid then passes through a filter drier 12, a sight glass 13, and a shut-off solenoid valve 14 to an automatic thermostatic expansion valve 15 through which it is expanded back into the evaporator 2. A hot gas by-pass pipe 33 leads from the compressor directly back to the evaporator with fluid flow there-through being controlled by a by-pass solenoid valve 16. Opening of this valve will allow hot super heated refrigerant vapour to enter the evaporator 2 down-stream of the expansion valve 15 to raise the temperature of the evaporator coil and melt any ice formation thereon. The defrost sequence is initiated during use of the heat pump
system and is terminated by means of a timed sequence
interfaced with the detection of the prevailing evaporator
temperature, activation being within certain specified
limits.

In a particular exemplary arrangement the
automatically controlled hot gas defrost control is such
that at pre-selected periods it will monitor the prevailing
temperature in the line of 34 and when that temperature has
dropped to 2 C the valve 16 will be opened to initiate
defrost with the defrosting operation being stopped once the
sensed temperature in line 34 has risen to 6 C.

The flow of water to be heated by the heat pump
system is fed into the housing of the system via a return
water conduit 27 which leads to the condenser receiver 10.
The water passes through the condenser 10 being heated by
heat exchange with the hot refrigerant gas therein to
condense the gas into liquid. The water passes on to the
coolant heat exchanger 9 and the exhaust heat exchanger 8
before passing through a water pump 11 to the supply conduit
leading to the space to be heated. With this arrangement
after the initial heating of the return water in the
condenser receiver 10 additional heating is obtained by
means of the passage through the engine coolant heat
exchanger 9 and the even hotter exhaust heat exchanger 8.

Because of the enclosing housing the air supply 1
passes over the various engine, compressor and heat exchange
components of the heat pump system to recover available
residual radiant heat therefrom prior to being passed
through the evaporator 2 and thence being exhausted to the
atmosphere.

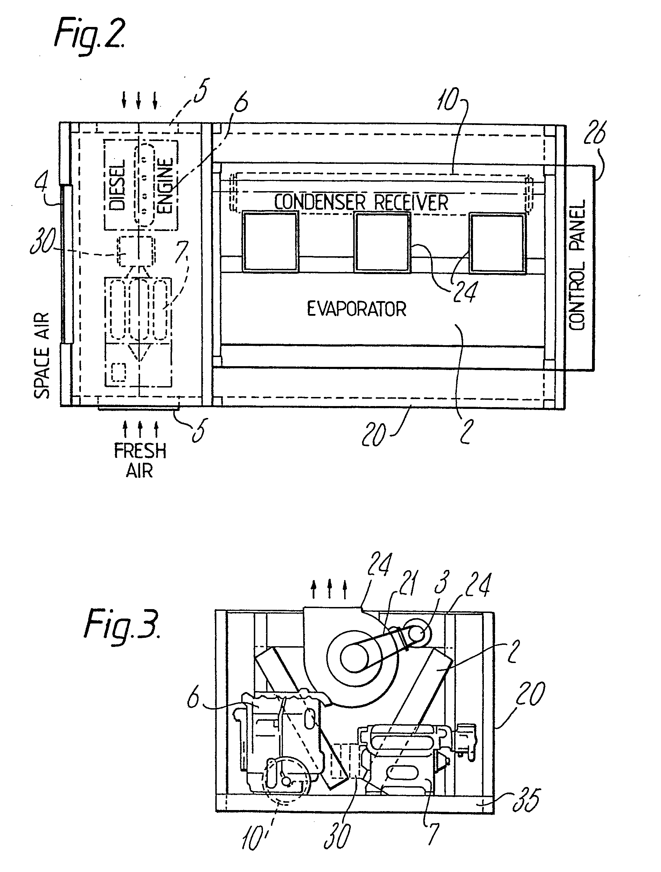

Figure 2 illustrates the heat pump system in plan
view with the various components of the heat system being
mounted as a self-containing unit on a transportable base 35
(Figure 3). A housing 20 is mounted on the base 35 to
enclose the components of the system, a control panel 26 being mounted at one end of the housing with the controllable damper inlet 4 for space air being provided at the other end of the housing. The automatic damper inlets 5 are shown at either side of the housing. Immediately adjacent the air inlets there are supported on the base a diesel engine 6 and a compressor 7 having a plurality of compressor cylinders which can be selectively unloaded as will be explained later. A magnetic clutch drive 30 is provided betwen the motor 6 and the compressor 7. Not shown in the drawings for reasons of clarity there will also be mounted within the housing the generator 31, if such is being provided at all, arranged to be driven by the engine 6, and the exhaust and coolant heat exchangers 8 and 9 respectively. Referring to Figure 3 the evaporator 2 can be seen as comprising two heat exchange coils arranged in substantially V-formation with the space across the top of the V being closed by a panel 25. Inlets to fans 22 communicate with the space within the V-shape defined by the evaporator with the fan being driven by a motor 3 _via_ a drive belt 21 to extract air from the space downstream of the evaporator 2 for expulsion through an air outlet 24 to the atmosphere. Three air outlet fans are shown in the drawings although it will be appreciated that the number of fans used will depend upon the size and arrangement of any particular installation.

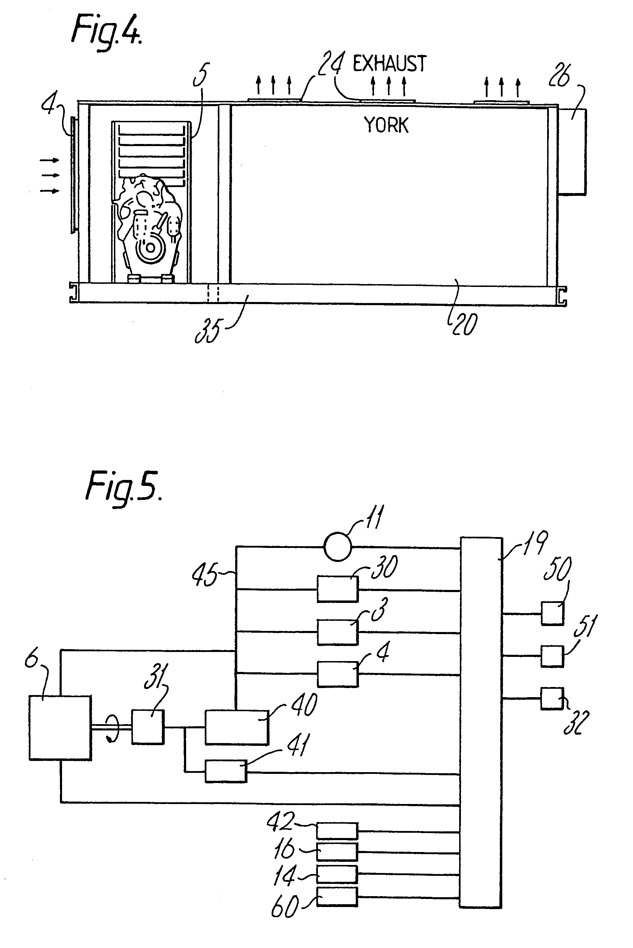

Figure 5 diagrammatically illustrates the control system for the heat pump above described and is for a preferred construction having the electrical generator 31 driven by the engine 6. Two batteries are connected to be charged by the generator, one being a heavy duty battery 40 for supplying power for starting the engine and to those parts of the system which require a substantial quantity of energy during operation and the other being a lighter duty battery 41 connected to control logic circuitry illustrated by block 19 of Figure 5. Thus in the drawing a bus 45 is shown connected to the heavy duty battery 40 and connected to the bus 45 are a return supply line to the engine 6 and connections for supplying power to the water pump 11, the magnetic clutch 30, the fans 3 and the damper 4. The water pump, clutch, fans and damper are also shown all connected individually to the control circuit 19 in that operation of these members will be controlled by the circuit 19 but be powered fromthe bus 45. Also shown as being controlled by the circuit 19 is a compressor unload control 42, the defrost solenoid 16 and the solenoid valve 14. Inputs to the control circuits 19 are provided by a relative humidity sensor 51 and a dry bulb temperature sensor 50, both of which will be within the space from which humid air will be extracted through the control damper 4, and the temperature sensor 32 in the conduit 31 leading from the evaporator to the compressor.

In use of the heat pump the control circuit 19 will be kept energised by the light duty battery 41. When the temperature sensor 50 senses that the temperature within the space being controlled has dropped below the desired level the circuit 19 will actuate starting of the engine 6 without causing engagement of the magnetic clutch 30. Once the engine 6 has reached running speed as sensed by a signal from the engine 6 back to circuitry 19, the water pump 11 and the fans 3 will be switched on and the magnetic clutch energised by the drive to the compressor 7 with the valve 14 being opened. The water circulated by the water pump 11 in the conduit 27 will be heated by passing through the condenser receiver 10 and the heat exchangers 9 and 8 before being pumped on to heat the space. The humidity of the air in the space will be checked by the circuitry with the dampers 4 being controlled to allow an increased flow of air from the space when its humidity has increased to too high a value. At the same time, as indicated previously, fresh air through the inlets 5 will be blended with the air from the space with heat being extracted from the air so that it passes through the evaporator 2 for recovery in the condenser receiver to heat the water being passed on for space heating purposes.

Should the temperature of the space to be heated start to increase above a predetermined level, which can be set on the control panel 26 by means not shown, the control circuit initially will control the engine throttle mechanism to slow it to approximately 70% of its normal desired output speed. If over-heating still occurs then the control circuitry will actuate compressor unload control 42 which will, in turn, unload the compressor cylinders until the required balance is achieved. Should the temperature still build up after unloading of a predetermined number, at least a majority, of the compressor cylinders then the control circuitry will automatically switch off the engine and return the system to its standby condition awaiting sufficient drop in temperature in the space being controlled for the engine to be switched on once again to restart the heating operation unless the engine is required to carry on running for electrical generation purposes, when the magnetic clutch mechanism will be disengaged.

Should there be a surface frost accumulation in the evaporator 2 there will be a temperature change noted by the sensor 32 of the gas leaving the evaporator which will cause the circuitry 19 to open the hot gas bypass solenoid valve 16 whereby the hot gas admitted to the evaporator will raise the temperature and melt the ice formation. The defrost sequence can either be initiated and terminated in dependence upon the sensing of lower and upper temperatures in a range as described previously, or may be initiated and terminated by means of a timer within the circuitry 19 the operation of which is triggered by the temperature sensed at 32 dropping below a pre-determined level.

Lighting means for the installation can also be powered from the generator 31 and conveniently the lighting will only be operable at full power under control of the circuitry 19 when the generator is being driven with stand-by lighting only being provided from the battery when the engine is not driving the generator. Means can be provided whereby with the magnetic clutch being de-energised so that there is no longer any drive to the compressor, the engine can continue to operate to drive the generator for battery charging or other power generation purposes.

The circuitry 19 can also be arranged to operate a warning device 60, or automatically to switch on some additional heating means, when the temperature in the space being controlled is not maintained despite the engine working at maximum speed with all cylinders of the compressor operating.

It will be appreciated that although one control arrangement has been illustrated in Figure 5 by way of example this is purely exemplary and any suitable control arrangement may be used with or without the provision of separate heavy and light duty batteries or, indeed, without the provision of the generator at all with the power being brought in from an outside source independent of the engine 6.

In an alternative arrangement instead of the control being entirely dependent on the temperature and relative humidity sensors 50 and 51 a temperature sensor may be placed in the return conduit 27. Accordingly once the system is in operation the speed of the engine and the number of cylinders of the compressor unloaded will depend on the temperature sensed in the return water whereas, as before, the initial switching on of the system will depend on the dry bulb temperature sensed in the space to be controlled, the dampers 4 being controlled in dependence upon the humidity.

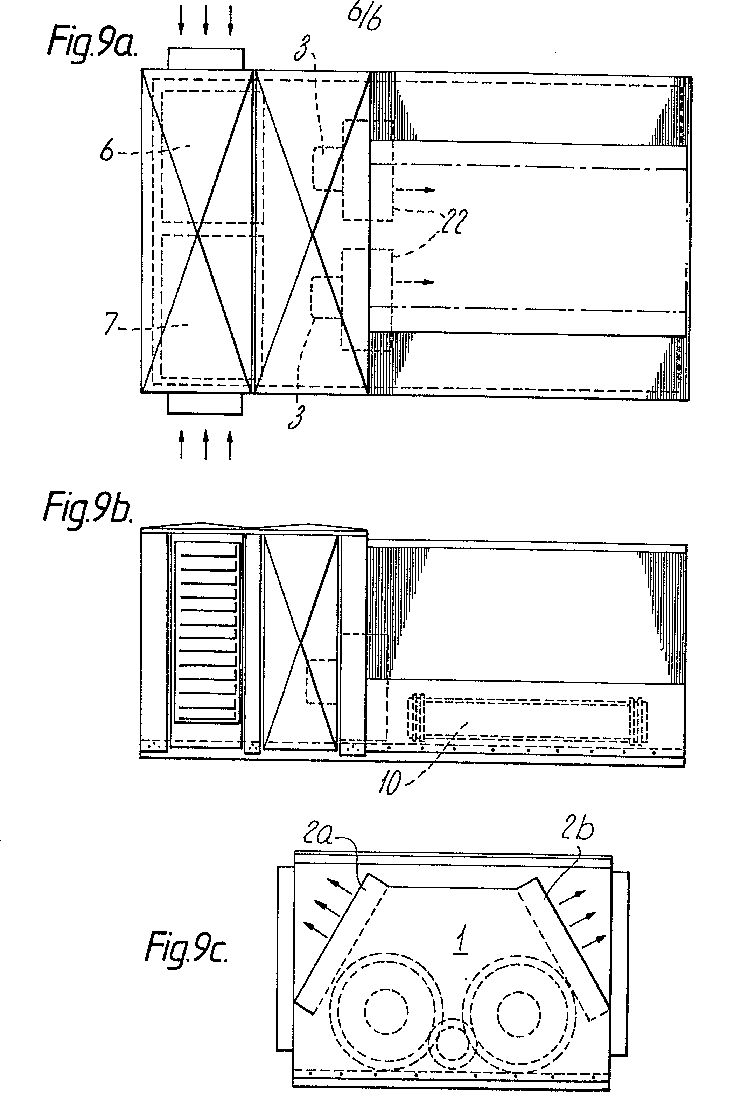

Figures 9a to 9c show a second embodiment of the first aspect of the invention in which the system components have been rearranged so that the air is blown through the two evaporator sections 2a and 2b, rather than being sucked as in Figures 1 to 4 so that the ducting required when air is being sucked through is eliminated. The embodiment is. otherwise similar to Figures 1 to 4.

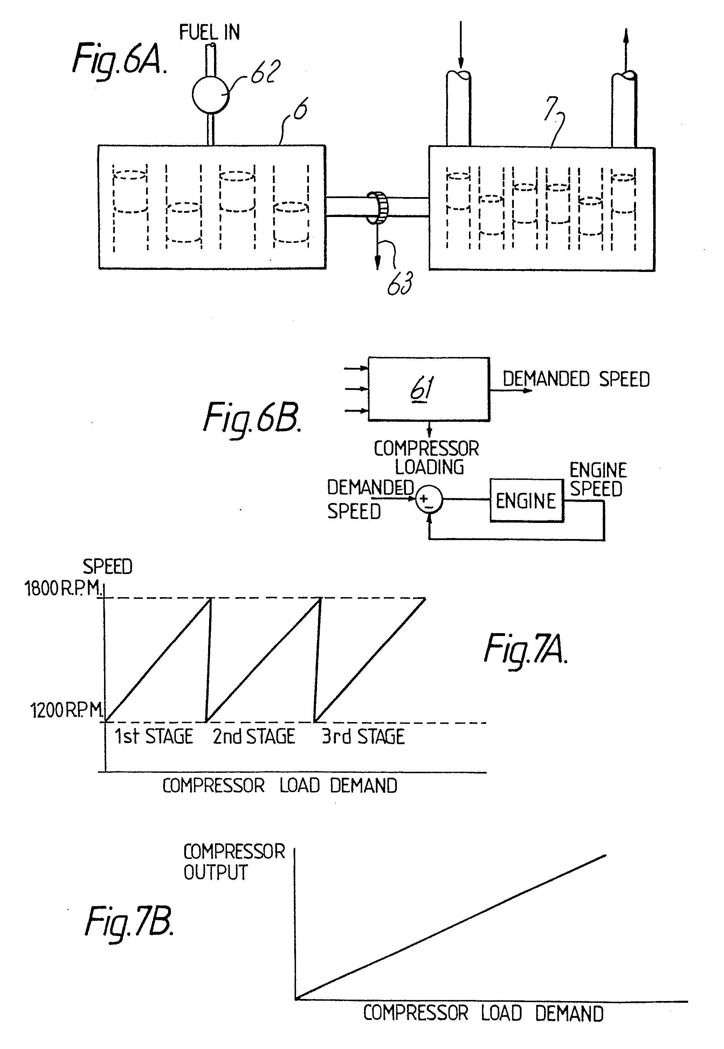

Figures 6a to 8 illustrate an example of heat pump apparatus according to the second aspect of the present invention. This will be described here in the context of its application to the heat pump system of Figures 1 to 5 but it will be appreciated that the heat pump apparatus of Figures 6a to 8 is not limited to that application and may be used in any suitable heat pump system.

As shown in Figures 6 and 7, the heat pump apparatus comprises the gas or diesel engine 6, a multi-stage compressor 7 and a control circuit 61 which may, in the application of the invention to the heat pump systems Figures 1 to 5, constitute a module of the control circuitry of Figure 5. The control circuit 61 is used to derive a signal used to operate an electro-mechanically actuated throttle valve 62 which controls the fuel delivered to the engine, the engine being under closed loop control of its operating speed by use of a conventional negative feedback loop, as illustrated in Figure 6b, in which the demanded engine speed, derived from the various input parameters which determine the compressor load and the actual engine speed derived from a tachometer 63, are combined to produce an actuating signal for the control valve 62. The tachometer 63, may be of any suitable type, for example using an optical or magnetic pulse pickup.

The control circuitry 61 also controls actuators which determine the number of stages of the compressor which are on line at any one time. It co-ordinates the response of the compressor and engine, in terms of the engine speed and number of stages on line, in dependence upon the compressor load demand as shown in Figure 7a. Thus for the minimum compressor load, the engine 6 is first started up and then run in accordance with a demanded speed signal from the control circuit 61 at its minimum normal operating speed, which might typically be 1200 rpm. At this stage, the first stage of the compressor is brought on-line. In
the case of a 6-cylinder compressor, the compressor
cylinders may be organised in three stages of two cylinders
each, although, of course, the cylinders could alternatively
be used as individual stages or there could be a different
number of cylinders in each stage, dependent on
considerations of system efficiency and prime energy usage.

As the compressor load demand increases during the
first stage of operation, the demanded speed, and hence the
actual speed, of the engine is increased in an infinite
variable manner until the maximum normal engine speed,
typically 1800 rpm, is reached. Then the control circuit
delivers a signal to the compressor to bring the second
compressor stage onto line, and, once this has been done, it
reduces the engine demanded speed back to 1200 rpm. Then,
for increasing compressor load demand, the engine speed is
increased up to 1800 rpm again and then a similar transition
occurs as the third stage is brought onto line. The net
result is that at least in principle, there is a linear
relationship between the compressor load demands and the
compressor output as shown in Figure 7b.

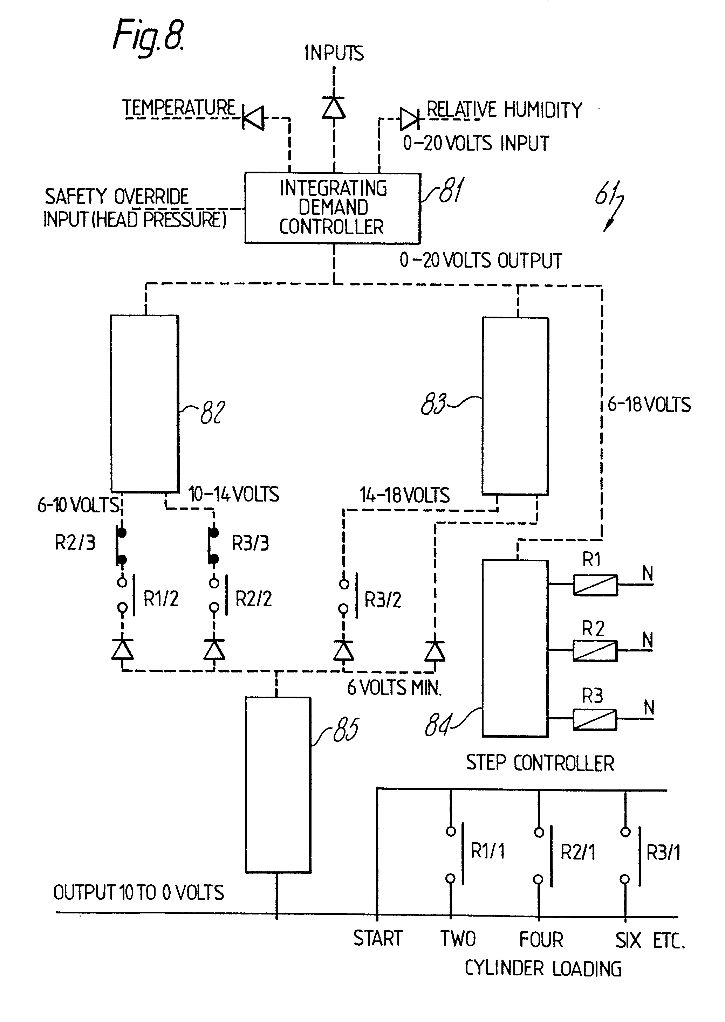

Figure 8 shows in more detail the control circuit
61. The implementation shown is analog although it will be
appreciated that an all-digital or an analog/digital hybrid
could be used instead. An integrating demand controller 81
receives input signals such as sensed temperature, sensed
relative humidity refrigerant head pressure, etc, and
produces an infinitely variable output signal representative
of the compressor load demand. This signal is applied both
to a pair of engine speed segment controllers 82 and 83 and
a compressor step controller 84. In the latter, the output
of the integrating demand controller 81 is compared by means
of analog comparators with reference voltages representing
the compressor load levels at which initiation of the first,
second and third compressor stages, respectively is desired.
This step controller 84 drives three relay coils R1, R2 and

-14-

R3 associated with respective compressor stage control valves so that one pair of cylinders is brought on line in the first stage then two more are added during the second stage and then the final two during the third stage. This is achieved by means of relay contacts R1/1 R2/1 and R3/1 controlled by the relay coils.

The segment controller 82 contains two similar sections which operate in a similar manner to one another over different input (and output) voltage bands. The first section contains a level comparator monitoring the input voltage and an analogue switch (or relay) which is closed to deliver an output voltage varying linearly (optionally with an adjustable slope) with the input when the level comparator detects an input of at least 6 volts. The second section of segment controller 82 operates in a similar fashion with a comparator threshold of 10 volts. The segment controller 83 contains a similar section with a comparator threshold of 14 volts and a reference voltage source producing a voltage of, say, 6 volts defining the minimum desired engine speed.

The purpose of having different slopes for the outputs from the three sections is to accommodate different operating conditions (for example varying efficiency factors) in the three (or more) stages of compressor operation which might make it desirable to proceed through the stages at different rates.

The three varying outputs from the segment controllers 82, 83 are connected to the input of the linear inversion controller 85, by means of normally open and normally closed contracts R1/2 R2/2 R2/3 R3/2 and R3/3, which select one of these three voltages for application to the inversion controller 85 to produce the engine demand speed output. The inversion controller 85 resets the ramp shown in Figure 7a at each compressor stage transition by a stepped voltage corresponding to substracting 600 rpm from the demanded engine speed at the transition on the first to the second compressor stage and then again from the second to the third stage by comparison of its input with reference voltages corresponding to the stage transitions. The second, reference output from the controller 83 is connected in an analog wired-OR fashion with the other three outputs from the controllers 82 and 83 so that a minimum voltage of 6 volts is always applied to the input of the controller 85. This is to keep the engine running at its minimum speed under no load conditions. The inversion controller 85 scales the resulting signal so that the demanded engine speed signal varies in the range 10 to 0 volts, 10 volts representing the minimum speed and 0 volts representing the maximum, so that overspeed conditions which might be caused by an excess input voltage in a fault condition are unhibited.

The upper voltages of the ranges of the outputs of the varying sections of controller 82 are determined by the opening of contracts R2/3 and R3/3 as determined by the step controller 84.

It will be appreciated that instead of the engine speed being modulated in a truly infinitely variable fashion, it could be modulated in a quasi-infinitely variable fashion, e.g. by using a multiplicity of demanded speed steps, the number of steps being so large that the engine speed behaviour is practically infinitely variable.

-16-

CLAIMS

1. A heat pump system comprising a fossil-fueled engine, a compressor drivable by said engine, a heat pump circuit comprising the compressor, a condenser receiver, an expansion valve and an evaporator connected in series, water conduit means for flowing water through said condenser receiver to a place of use with said water being heated within said condenser by transfer of heat from compressed refrigerant, and means for passing air over said engine and compressor to be heated thereby prior to being passed through said evaporator in heat exchange relationship with refrigerant passing therethrough during use of the system.

2. A heat pump system according to Claim 1, wherein said water conduit means is connected with a heat exchanger for the heating of water passed through said conduit means during use of the system using heat obtained from liquid engine coolant and/or exhaust gases.

3. A heat pump system according to claim 1 or 2, wherein an automatic defrost control is provided comprising a sensor for sensing temperature of refrigerant passing from the evaporator to the compressor and operative to initiate defrost where such temperature is $2^{o}$ centigrade and to terminate opening of the defrost valve when the sensed

temperature is 6$^{\circ}$ centigrade.

4. A heat pump system according to any preceding claim, wherein said air passing means comprises an air inlet to a housing containing said engine, condenser and compressor and a fan for causing an air flow from the interior of the housing through the evaporator to exhaust.

5. A heat pump system according to claim 4, wherein a controllable inlet is provided to the housing for the admission of humid air thereto, a fresh air inlet is provided for supplementing the supply of air from the controllable inlet and said fresh air inlet is arranged automatically to open to allow a controlled throughflow of air when the controllable inlet for humid air is at least partly closed.

6. A heat pump system according to any one of the preceding claims, and having a control system adapted to unload cylinders within the compressor assembly to reduce the heating capacity of the system responsive to sensing of a temperature above a predetermined level when said compressor speed has been reduced to a predetermined minimum operating speed.

7. Heat pump apparatus comprising a refrigerant compressor having a number of stages which can be loaded or unloaded responsive to varying compressor demand, a variable speed engine for driving the compressor, and a control circuit arranged to sense the compressor load and to control the engine speed so as to increase and decrease over a range as the compressor load increases and decreases over a corresponding range.

8.  Apparatus according to claim 7 wherein the compressor has a number of stages which can be loaded or unloaded responsive to varying compressor demand and the control circuit is aranged to control the compressor loading and unloading so that for progressively varying compressor demand loading or unloading of the compressor occurs in an alternating sequence with modulation of the engine speed across said range, so as to reduce the engine fuel consumption for a given compressor demand.

9.  Apparatus according to claim 8 wherein the control circuit is arranged to derive a signal representing compressor demand, to produce therefrom a demanded engine speed signal which is modified in accordance with the number of stages loaded or unloaded and to thereby control the engine throttle setting so that with changing compressor demand, following a change in the number of compressor stages in operation, the engine speed varies across its range.

10. Apparatus according to claim 8 wherein the control circuit is aranged so that the engine speed signal is so modified by subtracting a stepped amount dependent upon the number of compressor stages in operation.

11. Apparatus according to claim 9 or 10 in which the control circuit is arranged to produce a demanded engine speed which is analogue and whose amplitude decreases as the demanded speed increases.

12. A heat pump system according to any one of claims 1 to 6 and incorporating heat pump apparatus according to any one of claims 7 to 11.

# Fig.1.

FANS AND MOTORS 22 3

32 EVAPORATOR 2

15 EXPANSION VALUE

FRESH AIR 5

CONTROLLED DAMPER 4

34 1

SPACE AIR AIR SUPPLY

33

SOLENOID VALVE

16 14

FRESH AIR 5

HOT WATER SUPPLY TO SPACE

31 GENERATOR

GAS OR DIESEL ENGINE 6

DRIVE DRIVE

7 COMPESSOR

SOLENOID VALVE (DEFROST)

SIGHT GLASS 13

FILTER DRIER

12

11 WATER PUMP

8 EXHAUST

9 ENGINE COOLANT

10 CONDENSER RECEIVER

RETURN WATER 27

0069564

Fig.2.

SPACE AIR

DIESEL ENGINE

FRESH AIR

CONDENSER RECEIVER

EVAPORATOR

CONTROL PANEL

Fig.3.

Fig.4.

EXHAUST

YORK

Fig.5.

**Fig.6A.**

FUEL IN

62

6

7

63

**Fig.6B.**

61 → DEMANDED SPEED

COMPRESSOR LOADING

DEMANDED SPEED → (+/-) → ENGINE → ENGINE SPEED

SPEED

1800 R.P.M.

1200 R.P.M.

1st STAGE  2nd STAGE  3rd STAGE

COMPRESSOR LOAD DEMAND

**Fig.7A.**

COMPRESSOR OUTPUT

**Fig.7B.**

COMPRESSOR LOAD DEMAND

Fig.8.

Fig.9a.

Fig.9b.

Fig.9c.

0069564